# EUROPÄISCHE PATENTSCHRIFT

(11) **EP 0 764 100 B1**
(45) Veröffentlichungstag und Bekanntmachung des Hinweises auf die Patenterteilung: **06.05.1999**
(21) Anmeldenummer: 95922480.9
(22) Anmeldetag: 26.05.1995
(51) Int. Cl.: B60T 15/04

(54) **HYDRAULISCHES VENTIL, INSBESONDERE ZUM LÜFTEN EINER FEDERSPEICHERBREMSE**
HYDRAULIC VALVE, IN PARTICULAR A HYDRAULIC VALVE FOR EASING A SPRING-LOADED BRAKE
CLAPET HYDRAULIQUE, NOTAMMENT POUR DESSERRER UN FREIN A RESSORT ACCUMULATEUR

(30) Priorität: 09.06.1994 DE 4420136
(43) Veröffentlichungstag der Anmeldung: 26.03.1997
(73) Patentinhaber: Mannesmann Rexroth AG, 97813 Lohr am Main (DE)
(72) Erfinder: JOHN, Harald, D-63165 Mühlheim (DE); RÜB, Winfried, D-97845 Neustadt/Main (DE)
(86) Internationale Anmeldenummer: EP9501984
(87) Internationale Veröffentlichungsnummer: WO9533639

(56) Entgegenhaltungen:
- DE-A- 3 301 744
- DE-A- 3 436 130
- GB-A- 812 424
- US-A- 4 076 329

## Beschreibung

Die Erfindung geht aus von einem hydraulischen Ventil, das insbesondere zum Lüften einer Federspeicherbremse verwendet wird und die Merkmale aus dem Oberbegriff des Anspruchs 1 aufweist.

Das Betätigungsorgan eines solchen Ventils ist üblicherweise ein schwenkbarer Hebel, der von einem Fahrzeugführer per Hand oder Fuß betätigt wird. Ein von Hand zu betätigendes Bremsventil mit den Merkmalen aus dem Oberbegriff des Anspruchs 1 ist aus DE-A-3 301 744, dem Datenblatt RD 66148/02.89 der Fa. Mannesmann Rexroth GmbH, Lohr/Main, sowie aus dem praktischen Einsatz in Fahrzeugen bekannt. Bei diesem Bremsventil sind die Rückstellfeder und die Steuerungsfeder hintereinander angeordnet. Zwischen ihnen befinden sich Abstützmittel, die als ein einziges Abstützelement ausgebildet sind, das über einen Handhebel linear verschiebbar ist und in die eine Richtung von der Steuerungsfeder und in die entgegengesetzte Richtung von der Rückstellfeder beaufschlagt wird. Die Steuerungsfeder beaufschlagt außerdem den Regelkolben eines Druckregelventils, das einen mit einer Druckquelle zu verbindenden Druckanschluß, einen mit einem Druckmittelvorratsbehälter zu verbindenden Tankanschluß und einen Verbraucheranschluß aufweist. Der Druck an diesem Verbraucheranschluß ist auf den Regelkolben zurückgeführt und wirkt auf diesen gegen die Kraft der Steuerungsfeder. Am Verbraucheranschluß stellt sich ein solcher Druck ein, daß zwischen der auf den Regelkolben wirkenden Druckkraft und der auf den Regelkolben wirkenden Federkraft ein Gleichgewicht besteht. Da die von der Steuerungsfeder auf den Regelkolben in dessen Regelstellung ausgeübte Kraft von der Position des Abstützelements und damit von der Position des Handhebels abhängt, ist der Druck am Verbraucheranschluß und damit die Bremswirkung der Bremsanlage mit dem Handhebel feinfühlig dosierbar.

Dabei ist die Bremse ganz gelüftet und deshalb unwirksam, wenn der Druck am Verbraucheranschluß den mit dem Ventil maximal einstellbaren Wert hat. Die Bremse ist voll wirksam, wenn der Druck am verbraucheranschluß dem Tankdruck entspricht. Bei voll gelüfteter Bremse ist die Rückstellfeder am wenigsten gespannt. Ihre Kraft muß dann noch so groß sein, daß sie die von der Steuerungsfeder auf das Abstützelement ausgeübte Kraft, die der vom maximalen Regeldruck erzeugten Kraft entspricht, standhalten kann. Zum Aktivieren der Bremse ist der Regeldruck zu erniedrigen, also die Spannung der Steuerungsfeder zu verringern, also das Abstützelement in eine Richtung zu verschieben, die eine Vergrößerung der Spannung der Rückstellfeder mit sich bringt. Zwar wird die Verstellung des Abstützelements zunächst von der Steuerungsfeder stark unterstützt. Diese Unterstützung nimmt jedoch immer mehr ab, während die aufzubringende Kraft für die Verstellung des Abstützelements wegen der zunehmenden Spannung der Rückstellfeder zunimmt. Zuletzt ist die gegen die dann maximale und über der maximalen Druckkraft liegende Kraft der Rückstellfeder aufzubringende Kraft fast ganz über das Betätigungsorgan einzuleiten. Üblicherweise ist das Betätigungsorgan in der Stellung, in der die Kraft der Rückstellfeder maximal ist, verriegelbar, so daß das Ventil in seiner Stellung "Bremse voll aktiviert" auch dann verbleibt, wenn die Hand oder der Fuß der Bedienungsperson vom Betätigungsorgan weggenommen wird. Nach einem Lösen der Verriegelung kann die Rückstellfeder das Betätigungsorgan und das gesamte Ventil in die Stellung "Bremse gelüftet" bringen, ohne daß von außen eine Kraft eingeleitet wird.

Der Erfindung liegt die Aufgabe zugrunde, ein hydraulisches Ventil mit den Merkmalen aus dem Oberbegriff des Anspruchs 1 so weiterzuentwickeln, daß die Bedienkräfte verringert werden können bzw. daß die Bedienkräfte auch bei leistungsstarken Ventilen, die große Volumenströme ermöglichen sollen und deshalb im Durchmesser große Ventilglieder besitzen, moderat bleiben.

Diese Aufgabe wird für ein hydraulisches Ventil, das die Merkmale aus dem Oberbegriff des Anspruchs 1 besitzt, gemäß dem kennzeichnenden Teil dieses Anspruchs dadurch gelöst, daß im Kraftfluß zwischen der Rückstellfeder und der Steuerungsfeder Mittel zur mechanischen Kraftverstärkung liegen. Aufgrund einer solchen Ausbildung ist die Kraft, die die Rückstellfeder aufbringen muß, um die Steuerungsfeder im maximal gespannten Zustand zu halten, kleiner als bei einer direkten Einwirkung der Rückstellfeder auf die Steuerungsfeder. Ist aber diese von der Rückstellfeder aufzubringende Kraft kleiner, so wird die Rückstellfeder auch von einem niedrigeren Kraftniveau aus über das Betätigungsorgan stärker vorgespannt, so daß auch die maximal über das Betätigungsorgan einzuleitende Bedienkraft geringer ist. Somit können, wenn man voraussetzt, daß ein erfindungsgemäßes hydraulisches Ventil den gleichen Hydraulikteil wie ein aus dem Stand der Technik bekanntes hydraulisches Ventil aufweist, die Bedienkräfte kleiner gemacht werden. Andererseits kann, gleiche Bedienkräfte vorausgesetzt, ein leistungsstärkerer Hydraulikteil verwendet werden. Dieses Ergebnis wird erzielt, ohne daß bei Verwendung eines schwenkkbaren Handhebels als Betätigungsorgan die Bedienwege aufgrund eines langen Hebels oder eines großen Schwenkwinkels allzugroß werden und ohne daß eine Hilfskraft benutzt wird.

Vorteilhafte Ausgestaltungen eines erfindungsgemäßen hydraulischen Ventils kann man den Unteransprüchen entnehmen.

So sind der konstruktive Aufwand und der Platzbedarf besonders gering, wenn die Mittel zu mechanischen Kraftverstärkung gemäß Anspruch 2 als Hebel ausgebildet sind.
Ein Hebel ist ein Bauteil, das um eine Achse verschwenkbar ist. Im Prinzip können die Federn direkt an dem Hebel anliegen, wobei dieser Hebel zugleich ein einziges die Abstützmittel bildendes Abstützelement für beide Federn sein würde. Die Federn sind jedoch besser geführt und in ihrem Spannungszustand genauer definiert, wenn gemäß Anspruch 3 die Abstützmittel für die Steuerungsfeder ein erstes Abstützelement und für die Rückstellfeder ein davon verschiedenes, zweites Abstützelement aufweisen und beide Abstützelemente linear verschiebbar sind. Bevorzugt sind die beiden Abstützelemente dabei parallel zueinander verschiebbar.

Wenn die beiden Abstützelemente linear verschiebbar sind, ändert sich die für ein auf den Hebel ausgeübtes Drehmoment maßgebende Komponente der Kraft einer Feder mit der Lage des Hebels bzw. ändert sich die Länge des Hebelarmes, an dem die Federkraft angreift. Gemäß Anspruch 4 ist nun vorgesehen, daß das Verhältnis zwischen der wirksamen Länge des von der Rückstellfeder beaufschlagten Hebelarms und der wirksamen Länge des von der Steuerungsfeder beaufschlagten Hebelarms bei am weitesten entspannter Rückstellfeder größer ist als bei am stärksten gespannter Rückstellfeder. Somit wird, während die Kraft der Rückstellfeder abnimmt, die Kraftverstärkung größer, so daß eine weitere Verringerung der Federkraft und der Bedienkraft möglich ist.

Die Ausgestaltungen gemäß den Ansprüche 5 und 6 sind besonders vorteilhaft im Hinblick auf eine kompakte Bauweise des erfindungsgemäßen hydraulischen Ventils.

Auch gemäß Anspruch 7 ist wie gemäß einem Merkmal des Anspruches 6 das zweite Abstützelement, also das Abstützelement für die Rückstellfeder, im Gehäuse und das erste Abstützelement im zweiten Abstützelement verschiebbar geführt. Das zweite Abstützelement muß nun im Hinblick auf die Beaufschlagung des ersten Abstützelements durch den Hebel nicht besonders bearbeitet werden, wenn sich die am Hebel anliegende Anschlagfläche des ersten Abstützelements in jeder betrieblichen Position der beiden Abstützelemente näher an der Achse des Hebels befindet als die am Hebel anliegende Anschlagfläche des zweiten Abstützelements. Das zweite Abstützelement muß keine Aussparung in seiner Anschlagfläche haben, weil aufgrund der Ausbildung gemäß Anspruch 7 der Hebel nicht in das zweite Abstützelement einzutauchen braucht. Umgekehrt muß die Kontur, mit der der Hebel das erste Abstützelement beaufschlagt, nicht auf den Bereich von dessen Anschlagfläche begrenzt sein. Bei einem gemäß Anspruch 7 ausgebildeten hydraulischen Ventil wird die gewünschte Zunahme der Kraftverstärkung mit sich entspannender Rückstellfeder auf vorteilhafte Weise gemäß Anspruch 8 oder gemäß Anspruch 9 erhalten.

Im Sinne einer kompakten Bauweise des hydraulischen Ventils ist es vorteilhaft, wenn die Hebelarme des zwischen den beiden Abstützelementen angeordneten Hebels sehr kurz sind und somit die Abstützelemente und die Federn in einer kompakten Weise angeordnet werden können. Kurze Hebelarme sind auf vorteilhafte Weise gemäß Anspruch 10 dadurch möglich, daß sich die Anschlagstelle am Hebel für wenigstens eines der Abstützelemente in einer betrieblichen Position des Hebels innerhalb des Außendurchmessers einer im Gehäuse gelagerten Welle des Hebels befindet und die Welle zum Eintauchen wenigstens eines der beiden Abstützelemente mit einer Ausnehmung versehen ist. Eine Kontur der Welle, die von einem Abstützelement beaufschlagt wird, ist gemäß Anspruch 11 vorteilhafterweise nur im Bereich dieses Abstützelements vorhanden, so daß das andere Abstützelement über die besagte Kontur der Welle hinaus in einen Freiraum der Welle eintauchen kann.

Für eine einfache Herstellung des Hebels sind gemäß Anspruch 13 in der Welle Stifte befestigt, die in die Ausnehmung der Welle hineinragen und die von den Abstützelementen beaufschlagten Konturen der Welle bilden. Gemäß Anspruch 14 weist die Welle für einen Stift eine axial verlaufende Bohrung auf, die axial aufgeschnitten ist und mit ihrer noch vorhandenen Bohrungswand den Stift auf seiner gesamten Länge gegen die von einer Feder auf ihn ausgeübte Kraft abstützt. Der Stift wird deshalb nicht auf Biegung beansprucht. Ist die Bohrung gemäß Anspruch 15 nur über einen Teil ihrer Länge aufgeschnitten, so wird der Stift besonders sicher an der Welle gehalten. Der im aufgeschnittenen Teil der Bohrung noch vorhandene Kreisbogen der Bohrungswand kann gemäß Anspruch 16 kleiner oder gleich 180° sein, so daß viel Freiraum zum Eintauchen der Abstützelemente vorhanden ist. Die Ausbildung gemäß Anspruch 16 ist besonders vorteilhaft im Zusammenspiel mit dem Merkmal aus Anspruch 15, da dann noch ein in einer Radialebene geschlossener Abschnitt der Bohrung vorhanden ist, der den Stift auch dann sicher an der Welle hält, wenn das Ventil noch nicht zusammengebaut ist.

Durch die Verwendung von Stiften unterschiedlicher Durchmesser zur Beaufschlagung durch das erste Abstützelement und durch das zweite Abstützelement kann man bei vorgegebenen Positionen der Abstützelemente bestimmte Winkel zwischen der Richtung einer Federkraft und einem Hebelarm vorgeben.

Gemäß Anspruch 18 werden als Stifte vorzugsweise Nadelrollen verwendet, die für Wälzlager in großen Stückzahlen hergestellt werden und eine Oberfläche mit geringer Rauhtiefe aufweisen.

Ist das Betätigungsorgan eines erfindungsgemäßen hydraulischen Ventils als ein schwenkbarer Hebel ausgebildet, der an einer im Gehäuse gelagerten Welle befestigt ist, so ist bevorzugt gemäß Anspruch 19 diese Welle auch die Welle des zwischen den Federn angeordneten Hebels. Damit ist die Anzahl von Bauteilen gering und eine kompakte Bauweise möglich.

Gemäß den Ansprüchen 20 und 21 ist ein Hohlraum des Gehäuses, in dem sich die Rückstellfeder, die Steuerungsfeder, die Abstützelemente und die Mittel zur Kraftverstärkung befinden, mit Öl gefüllt. Dann sind die aneinander gleitenden Anlageflächen der verschiedenen Teil geschmiert, so daß die Reibungskräfte gering sind. Auch dies trägt zu geringen Bedienkräften bei.

Ein Ausführungsbeispiel eines erfindungsgemäßen hydraulischen Ventils ist in den Zeichnungen dargestellt. Anhand der Figuren dieser Zeichnungen wird die Erfindung nun näher erläutert.

Es zeigen
- Figur 1: das Ausführungsbeispiel in der Bremsstellung und in einem durch die Achse des Regelkolbens gehenden Schnitt,
- Figur 2: einen Schnitt in der gleichen Schnittebene wie in Figur 1, wobei sich jedoch das Ventil in der Fahrstellung befindet,

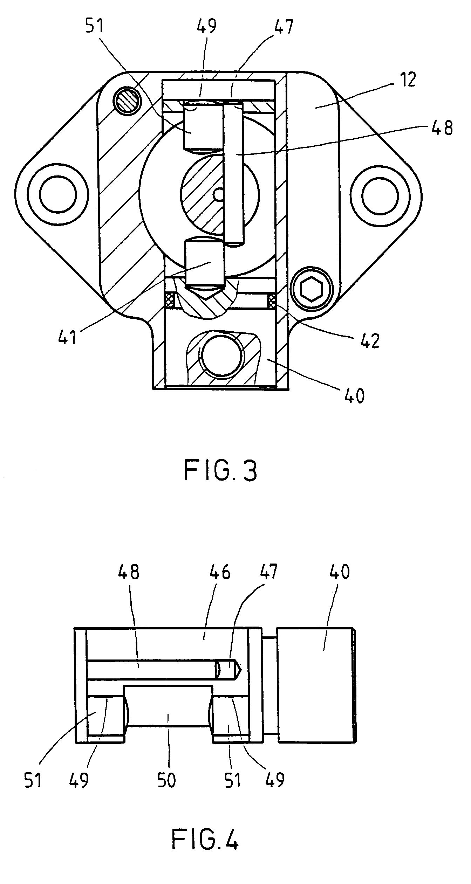

- Figur 3: einen Schnitt entlang der Linie III-III aus Figur 1 und
- Figur 4: eine Seitenansicht der Betätigungswelle des Ventils.

Das in den Figuren dargestellte hydraulische Ventil ist ein Handbremsventil mit einem Gehäuse 10, das sich im wesentlichen aus einem Gehäuseunterteil 11 und einem Gehäuseoberteil 12 zusammensetzt. Ein Ventilbohrung 13 des Gehäuseunterteils 11 nimmt verschieblich einen Regelkolben 14 auf, ist am einen Ende durch einen Verschlußstopfen 15 verschlossen und mündet am anderen Ende in einen größeren innerhalb der beiden Gehäuseteile gebildeten, im Querschnitt kreiszylindrischen Hohlraum 16. In einem axialen Abstand voneinander gehen von der Ventilbohrung 13 drei Radialbohrungen 17, 18 und 19 aus, wobei die Radialbohrung 17 mit einer Druckmittelquelle, die Radialbohrung 18, die dem Hohlraum 16 am nähesten ist, mit einem Druckmittelvorratsbehälter und die Radialbohrung 19 mit einem Verbraucher zu verbinden ist. Die drei Bohrungen sind zusätzlich zu den Bezugszahlen mit den üblichen Buchstabenbezeichnungen P, T und A gekennzeichnet. In den Regelkolben 14 ist eine zum Stopfen 15 hin offene Sackbohrung 20 eingebracht, die über mehrere radiale Steuerbohrungen 21 mit der kreiszylindrischen Außenfläche des Regelkolbens 14 in Verbindung steht. Über die Steuerbohrungen 21, die Sackbohrung 20 und die Ventilbohrung 13 kann der Verbraucheranschluß 19 des Ventils entweder mit dem Druckanschluß 17 oder mit dem Tankanschluß 18 verbunden werden. Der Druck im Verbraucheranschluß 19 wirkt in axialer Richtung auf den Regelkolben 14 und erzeugt eine Kraft, die den Regelkolben 14 vom Stopfen 15 weg weiter in den Hohlraum 16 hineinzuschieben sucht.

In diesem Hohlraum 16 sind eine Rückstellfeder 25, eine Steuerungsfeder 26, ein erstes Abstützelement 27 und ein zweites Abstützelement 28 untergebracht. Das zweite Abstützelement ist eine Hülse mit einer gestuften Axialbohrung 29 und ist innerhalb des Gehäuseoberteils 12 in dem Hohlraum 16 axial verschiebbar geführt. Die radiale Stufe zwischen den beiden Abschnitten 30 und 31 der Axialbohrung 29 im Abstützelement 28 ist zur Mündung der Ventilbohrung 13 in den Hohlraum 16 hin gerichtet. Der Abschnitt 30 mit dem größeren Durchmesser ist also zu dieser Mündung hin offen. Zwischen das zweite Abstützelement 28 und das Gehäuseunterteil 11 ist die Rückstellfeder 25 eingespannt. Das kolbenartige, erste Abstützelement 27 ist innerhalb des Abschnittes 31 der Axialbohrung 29 im Abstützelement 28 in Achsrichtung des Hohlraums 16 verschiebbar geführt. Zwischen ihm und einem auf einen in den Hohlraum 16 hineinragenden Abschnitt des Regelkolbens 14 aufgesetzten Federteller 32 ist die Steuerungsfeder 26 eingespannt, die sich innerhalb der Rückstellfeder 25 befindet, in den Abschnitt 30 der Axialbohrung 29 des zweiten Abstützelementes 28 hineinreicht und dort das erste Abstützelement 27 beaufschlagt.

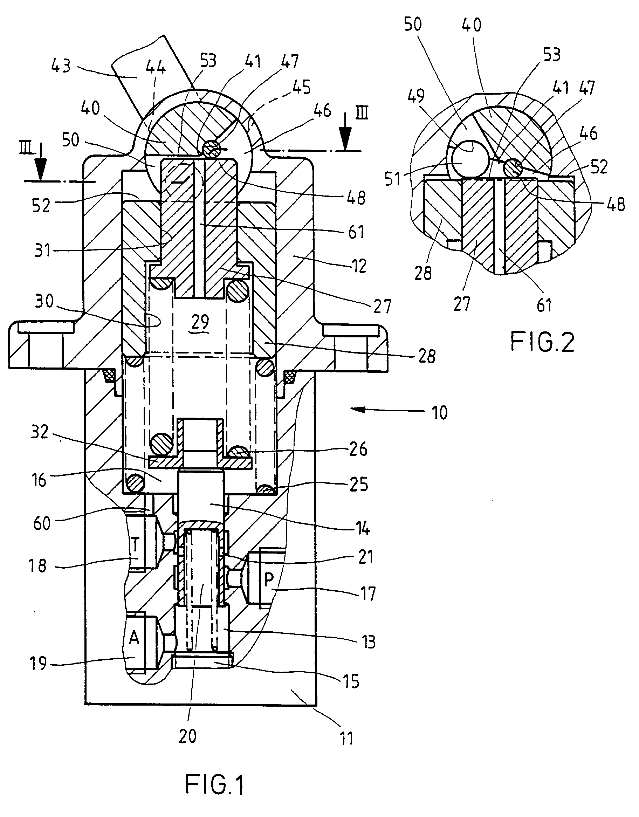

Eine Welle 40 mit einem bestimmten Außendurchmesser und mit einer Achse 41, die senkrecht durch die Achse des Hohlraums 16 hindurchgeht, ist beidseits des Hohlraums 16 im Gehäuseoberteil 12 drehbar gelagert. Im Bereich des Hohlraums 16 ist die Welle 40 vom Hohlraum 16 aus zugänglich. Zum einen Ende hin tritt die Welle unter Abdichtung durch einen Dichtring 42 durch ein Lagerauge des Gehäuseoberteils 12 hindurch nach außen, wo ein Handhebel 43 in sie eingeschraubt ist. Durch einstückig mit dem Gehäuseoberteil 12 ausgebildete Anschläge 44 und 45, die in Figur 1 gestrichelt eingezeichnet sind, ist der Schwenkwinkel des Handhebels 43 begrenzt.

In Richtung der Welle 40 betrachtet, ist diese im Bereich des Hohlraums 16 mit einer Aussparung 46 versehen, die einen halbkreisförmigen Querschnitt besitzt. Diese Aussparung ist aus der Weile 40 ausgefräst worden. Vor dem Fräsen ist in die Welle 40 von der einen Stirnseite her eine axiale Sackbohrung 47 eingebracht worden, deren Bohrungswand im Bereich der Aussparung 46 im Querschnitt nur noch über einen Winkel von weniger als 180° vorhanden ist und die im Bereich der Aussparung nur noch als teilzylindrische Rinne erkennbar ist. In die sackbohrung 47 ist eine Nadelrolle 48 eingedrückt. Diese ist seitlich der Aussparung 47 auf ihrem gesamten Umfang vom Material der Welle 40 umgeben und dadurch vor einem Herausfallen aus der Bohrung 47 gesichert. Parallel zur Sackbohrung 47 verläuft in der Welle 40 eine weitere Sackbohrung 49, die an derselben Stirnseite der Welle 40 wie die Sackbohrung 47 offen ist und axial über die Aussparung 46 hinausreicht. Auch die Sackbohrung 49 ist innerhalb der Aussparung 46 nur als teilkreiszylindrische Rinne erkennbar. Außerdem ist sie durch eine weitere Aussparung 50 der Welle 40, die sich mittig der Aussparung 46 befindet und kürzer als diese ist, völlig unterbrochen und zweigeteilt. In jedem Teil der Bohrung 49 ist eine Nadelrolle 51 eingedrückt, die axial in die Aussparung 46 hineinragt, die Aussparung 50 jedoch weitgehend frei läßt. Die beiden Nadelrollen 51 sind gleich. Ihr Durchmesser ist wesentlich größer als derjenige der Nadelrolle 48. Alle Nadelrollen befinden sich ganz innerhalb des Außenumfangs der Welle 40.

Aufgrund der Aussparungen 46 und 50 können die Abstützelemente 27 und 28 radial in die Welle 40 eintauchen. Das Abstützelement 28 wird von der Rückstellfeder 25 mit einer ebenen, parallel zur Achse der Welle 40 verlaufenden Anschlagfläche 52 gegen die Nadelrollen 51 gedrückt. Damit das Abstützelement 28 innerhalb des Schwenkbereichs des Handhebels 43 und der Welle 40 immer an den Nadelrollen 51 anliegen kann, ist nur die Aussparung 46 notwendig. Der lichte Abstand zwischen den Nadelrollen 51 und die Aussparung 50 ermöglichen ein tieferes Eintauchen des Abstützelements 27 in die Welle 40 und das dauernde Anliegen dieses Abstützelements an der Nadelrolle 48 mit einer Anschlagfläche 53. Die Nadelrollen 48 und 51 sind so angeordnet, daß die Welle 40 für die Abstützelemente 27 und 28 einen zwelarmigen Hebel in dem Sinne bildet, daß sich die Abstützelemente 27 und 28 bei einer Verdrehung der Welle 40 innerhalb des möglichen schwenkbereichs in einander entgegengesetzte Bichtungen verschieben.

Die Figur 1 zeigt die Welle 40 sowie die Abstützelemente 27 und 28 in einer Endlage, die einem minimalen Druck am verbraucheranschluß 19 des Ventils entspricht. Die Steuerungsfeder kann am stärksten entspannt sein. Die Rückstellfeder 25 ist am stärksten gespannt. In der anderen Endlage der Welle 40, die in Figur 2 gezeigt ist, ist die Rückstellfeder 25 am weitesten entspannt, während die Steuerungsfeder 26 stark vorgespannt ist. Man erkennt, daß sich in beiden Endlagen und somit auch dazwischen die Anschlagfläche 53 des Abstützelements 27 näher an der Achse 41 der Welle 40 befindet als die Anschlagfläche 52 des Abstützelements 28. In der Abstützfläche 52 sind deshalb keine Aussparungen für die Nadellrolle 48 vorzusehen. Man erkennt weiterhin, daß für die von der Rückstellfeder 25 auf die Welle 40 ausgeübte Kraft die wirksame Hebellänge in der Endlage nach Figur 2 maximal und in der Endlage nach Figur 1 minimal ist. Die wirksame Hebellänge für die von der Steuerungsfeder 26 auf die Welle 40 ausgeübte Kraft nimmt, ausgehend von der Endlage nach Figur 2, bei einer Drehung der Welle 40 zur anderen Endlage hin zunächst zu bis auf einen maximalen Wert, wenn die von der Achse 41 der Welle 40 und von der Achse der Nadelrolle 48 aufgespannte Ebene senkrecht zur Kraftrichtung steht, um dann wieder abzunehmen. Auf jeden Fall ist das Verhältnis der wirksamen Hebelarmlänge für die Rückstellfeder 25 zur wirksamen Hebelarmlänge für die Steuerungsfeder 26 in der Endlage nach Figur 2 wesentlich größer als in der Endlage nach Figur 1.

Der Handhebel 43 ist in nicht näher dargestellter, jedoch aus dem Stand der Technik an sich bekannter Weise als Rohr ausgebildet, in dem ein Sperrbolzen axial verschiebbar ist. In der in Figur 1 gezeigten Stellung kann dieser Sperrbolzen von einer Feder in eine Sackbohrung des Gehäuseoberteils 12 hineingeschoben werden. Die in Figur 1 gezeigte Stellung des Ventils ist also verriegelbar. Durch Ziehen eines axial am Handhebel 43 verstellbaren zusätzlichen Bedienelements kann der Sperrbolzen aus der Sackbohrung herausgezogen werden, so daß ein Verdrehen der Welle 40 und des Handhebels 43 von der in Figur 1 gezeigten Position in die in Figur 2 gezeigte Position möglich ist. Dieses Verschwenken kann allein von der Rückstellfeder 25 herbeigeführt werden. Diese drückt, ausgehend von der in Figur 1 gezeigten Position, das Abstützelement 28 zunächst mit großer Kraft gegen die Nadelrollen 51 und übt damit ein Drehmoment auf die Welle 40 aus, das größer ist als das von der Steuerungsfeder 26 bewirkte Gegenmoment. Die Welle 40 dreht sich, nach Figur 1 betrachtet, im Uhrzeigersinn. Dabei entspannt sich die Rückstellfeder 25 teilweise, so daß die von ihr ausgeübte Kraft geringer wird. Allerdings wird das Hebelverhältnis für sie allmählich günstiger. Die durch das Hebelverhältnis übersetzte Kraft reicht aus, um schließlich die Steuerungsfeder 26 in ihren am stärksten vorgespannten Zustand zu bringen, in der die von der Steuerungsfeder 26 erzeugte Federkraft der durch den Druck im Verbraucheranschluß 19 am Regelkolben 14 erzeugten Druckkraft entspricht. Von der Position nach Figur 2 können die Elemente durch Verdrehen der Welle 40 von außen wieder in die in Figur 1 gezeigten Positionen gebracht werden, wobei beim Erreichen der Endposition nach Figur 1 die größte Kraft von außen aufzubringen ist, da zum einen die Rückstellfeder 25 am stärksten vorgespannt und zum anderen die Steuerungsfeder 26 am stärksten entspannt ist.

Der Hohlraum 16 ist über eine kleine Bohrung 60 im Gehäuseunterteil 11 mit dem Tankanschluß 18 des Ventils verbunden. Außerdem führt durch das Abstützelement 27 eine axiale Bohrung 61 hindurch. Somit ist der Hohlraum 16 beidseits der Abstützelemente 27 und 28 mit Öl gefüllt, wobei durch die Bohrung 60 Volumenänderungen, die sich durch das mehr oder weniger weite Eintauchen des Regelkolbens 14 in den Hohlraum 16 ergeben, ausgeglichen werden können. Durch das Öl sind auch die Nadelrollen 48 und 51 sowie die Anschlagflächen 52 und 53 an den Abstützelementen 27 und 28 benetzt, so daß die Reibung zwischen den einander berührenden Flächen geringgehalten wird. Auch dies trägt dazu bei, daß die Bedienkräfte gering sind.

## Patentansprüche

1. Hydraulisches Ventil, insbesondere zum Lüften einer Federspeicherbremse, mit einem Gehäuse (10) und einem daran gelagerten, in entgegengesetzte Richtungen verstellbaren Betätigungsorgan (43), mit einem im Gehäuse (10) bewegbar untergebrachten Ventilglied (14), mit einer Steuerungsfeder (26), die zwischen bewegbaren Abstützmitteln (27, 28) und dem Ventilglied (14) angeordnet ist, und mit einer Rückstellfeder (25), die zwischen dem Gehäuse (10) und den Abstützmitteln (27, 28) angeordnet ist, deren Spannung durch ein Bewegen des Betätigungsorgans (43) in die eine Richtung vergrößerbar ist unter gleichzeitiger Entspannung der Steuerungsfeder (26) und von welcher Rückstellfeder (25) bei in die entgegengesetzte Richtung frei bewegbarem Betätigungsorgan (43) die Abstützmittel (27, 28) im Sinne einer Spannungserhöhung der Steuerungsfeder (26) verstellbar sind, **gekennzeichnet** durch im Kraftfluß zwischen der Rückstellfeder (25) und der Steuerungsfeder (26) liegende Mittel (40, 48, 51) zur mechanischen Kraftverstärkung.

2. Hydraulisches Ventil nach Anspruch 1 **gekennzeichnet** durch einen im Kraftfluß zwischen der Rückstellfeder (25) und der Steuerungsfeder (26) angeordneten Hebel (40, 48, 51).

3. Hydraulisches Ventil nach Anspruch 2, **dadurch gekennzeichnet,** daß die Abstützmittel für die Steuerungsfeder (26) ein erstes Abstützelement (27) und für die Rückstellfeder (25) ein davon verschiedenes, zweites Abstützelement (28) aufweisen und daß beide Abstützelemente (27, 28) vorzugsweise parallel zueinander linear verschiebbar sind.

4. Hydraulisches Ventil nach Anspruch 3, **dadurch gekennzeichnet,** daß das Verhältnis zwischen der wirksamen Länge des von der Rückstellfeder (25) beaufschlagten Hebelarms und der wirksamen Länge des von der Steuerungsfeder (26) beaufschlagten Hebelarms des Hebels (40, 48, 51) bei am weitesten entspannter Rückstellfeder (25) größer ist als bei am stärksten gespannter Rückstellfeder (25).

5. Hydraulisches Ventil nach Anspruch 3 oder 4, **dadurch gekennzeichnet,** daß die Rückstellfeder (25) den Hebel (40, 48, 51) auf der einen Seite und die steuerungsfeder (26) den Hebel (40, 48, 51) auf der anderen Seite einer von der Bewegungsrichtung der Abstützelemente (27, 28) und der Achse (41) des Hebels (40, 48, 51) aufgespannten Ebene aus derselben Richtung beaufschlagen und die beiden Abstützelemente (27, 28) bei einer Verstellung entgegengesetzt zueinander verschiebbar sind.

6. Hydraulisches Ventil nach Anspruch 5, **dadurch gekennzeichnet,** daß das zweite Abstützelement (28) im Gehäuse (10) und das erste Abstützelement (27) im zweiten Abstützelement (28) verschiebbar geführt ist und daß die Rückstellfeder (25) die Steuerungsfeder (26) umgibt.

7. Hydraulisches Ventil nach Anspruch 5 oder 6, **dadurch gekennzeichnet,** daß das zweite Abstützelement (28) im Gehäuse (10) und daß erste Abstützelement (27) im zweiten Abstützelement (28) verschiebbar geführt ist, und daß sich die am Hebel (40, 48, 51) anliegende Anschlagfläche (53) des ersten Abstützelements (27) in jeder betrieblichen Position der beiden Abstützelemente (27, 28) näher an der Achse (41) des Hebels (40, 48, 51) befindet als die am Hebel (40, 48, 51) anliegende Anschlagfläche (52) des zweiten Abstützelements.

8. Hydraulisches Ventil nach den Ansprüchen 4 und 7, **dadurch gekennzeichnet,** daß bei einer Bewegung des Hebels (40, 48, 51) von am stärksten gespannten in den am geringsten gespannten Zustand der Rückstellfeder (25) die wirksame Länge des von der Rückstellfeder (25) beaufschlagten Hebelarms kontinuierlich größer wird und im geringsten gespannten Zustand der Rückstellfeder (25) den maximal möglichen Betrag hat.

9. Hydraulisches Ventil nach Anspruch 8, **dadurch gekennzeichnet,** daß bei einer Bewegung des Hebels (40, 48, 51) vom am stärksten gespannten in den am geringsten gespannten Zustand der Rückstellfeder (25) die wirksame Länge des von der Steuerungsfeder (26) beaufschlagten Hebelarms zunächst kontinuierlich größer wird, einen maximal möglichen Betrg annimmt und dann kontinuierlich kleiner wird.

10. Hydraulisches Ventil nach einem der Ansprüche 3 bis 9, **dadurch gekennzeichnet,** daß der Hebel (40, 48, 51) eine im Gehäuse (10) gelagerte Welle (40) aufweist, daß sich die Anschlagstelle (48, 51) am Hebel (40, 48, 51) für wenigstens eines der Abstützelemente (27, 28) in einer betrieblichen Position des Hebels (40, 48, 51) innerhalb des Außendurchmessers der Welle (40) befindet und daß die Welle (40) zum Eintauchen wenigstens eines der beiden Abstützelemente (27, 28) mit einer Ausnehmung (46, 50) versehen ist.

11. Hydraulisches Ventil nach Anspruch 10, **dadurch gekennzeichnet,** daß eine vom einen Abstützelement (28) beaufschlagte Kontur (51) der Welle (40) nur im Bereich dieses Abstützelements (28) vorhanden ist und daß das andere Abstützelement (27) in einer betrieblichen Position in einen in Richtung der Achse des Hebels (40, 48, 51) der Kontur (51) folgenden Freiraum (50) der Welle (40) eintaucht.

12. Hydraulisches Ventil nach Anspruch 11, **dadurch gekennzeichnet,** daß die Kontur (51) beidseits des Freiraums (50) vorhanden und beidseits des Freiraums (50) von dem einen Abstützelement (28) beaufschlagt ist.

13. Hydraulisches Ventil nach einem der Ansprüche 3 bis 12, **dadurch gekennzeichnet,** daß der Hebel (40, 48, 51) eine im Gehäuse (10) gelagerte Welle (40) aufweist und daß in der Welle (40) Stifte (48, 51) befestigt sind, die in die Ausnehmung (46, 50) der Welle (40) hineinragen und die von den Abstützelementen (27, 28) beaufschlagten Konturen der Welle (40) bilden.

14. Hydraulisches Ventil nach Anspruch 13, **dadurch gekennzeichnet,** daß die Welle (40) für einen Stift (48, 51) eine axial verlaufende Bohrung (47, 49) aufweist, die axial aufgeschnitten ist, und daß der Stift (48, 51) auf seiner gesamten Länge durch noch vorhandene Bohrungswand gegen die von einer Feder (25, 26) auf ihn ausgeübte Kraft abgestützt ist.

15. Hydraulisches Ventil nach Anspruch 14, **dadurch gekennzeichnet,** daß die Bohrung (47, 49) nur über einen Teil ihrer Länge aufgeschnitten ist.

16. Hydraulisches Ventil nach Anspruch 14 oder 15, **dadurch gekennzeichnet,** daß der im aufgeschnittenen Teil der Bohrung (47, 49) noch vorhandene Kreisbogen der Bohrungswand kleiner oder gleich 180° ist.

17. Hydraulisches Ventil nach einem der Ansprüche 13 bis 16, **dadurch gekennzeichnet,** daß in der Welle (40) zur Beaufschlagung durch das erste Abstützelement (27) ein erster Stift (48) und zur Beaufschlagung durch das zweite Abstützelement (28) ein zweiter Stift (51) befestigt ist und daß die Stifte (48, 51) unterschiedliche Durchmesser haben.

18. Hydraulisches Ventil nach einem der Ansprüche 13 bis 17, **dadurch gekennzeichnet,** daß Nadelrollen (48, 51) die Stifte bilden.

19. Hydraulisches Ventil nach einem der Ansprüche 2 bis 18, **dadurch gekennzeichnet,** daß das Betätigungsorgan (43) als ein schwenkbarer Hebel ausgebildet und an einer im Gehäuse (10) gelagerten Welle (40) befestigt ist und daß diese Welle (40) auch die Welle des zwischen den Federn (25, 26) angeordneten Hebels (40, 48, 51) ist.

20. Hydraulisches Ventil nach einem der Ansprüche 3 bis 19, **dadurch gekennzeichnet,** daß ein mit einem Druckmittelvorratsbehälter zu verbindender Tankanschluß (18) vorhanden ist, daß ein Hohlraum (16) des Gehäuses (10), in dem sich die Rückstellfeder (25), die Steuerungsfeder (26), die Abstützelemente (27, 28) und die Mittel (40, 48, 51) zur Kraftverstärkung befinden, vorzugsweise intern mit dem Tankanschluß verbunden ist und daß durch einen Kanal (61) Öl zwischen den zwei Teilräumen beidseits der Abstützelemente (27, 28) austauschbar ist.

21. Hydraulisches Ventil nach Anspruch 20, **dadurch gekennzeichnet,** daß sich der Kanal (61) in einem Abstützelement (27) befindet.

## Claims

1. A hydraulic valve, in particular for releasing a spring-loaded brake, having a housing (10) and an actuating device (43) adjustable in opposed directions supported on the housing, having a valve member (14) movably accommodated in the housing (10), having a control spring (26) that is disposed between movable supporting elements (27, 28) and the valve member (14), and having a restoring spring (25), which is disposed between the housing (10) and the supporting elements (27, 28) and whose stressing can be increased in one direction by moving the actuating device (43) while simultaneously relieving the stressing of the control spring (26), and by which, with the actuating device (43) freely movable in the opposite direction, the supporting elements (27, 28) of the control spring (26) are adjustable in such a way as to increase the stressing of the control spring (26), **characterized by** means (40, 48, 51) for mechanical force amplification located in the flow of force between the restoring spring (25) and the control spring (26).

2. Hydraulic valve according to claim 1, **characterized by** a lever (40, 48, 51) located in the flow of force between the restoring spring (25) and the control spring (26).

3. Hydraulic valve according to claim 2, **characterized in that** for the control spring (26) a first supporting element (27), and for the restoring spring (25) a second supporting element (28), different from the first, are provided, and that both supporting elements (27, 28) are linearly displaceable, preferably parallel to one another.

4. Hydraulic valve according to claim 3, **characterized in that** the ratio between the effective length of the lever arm of the lever (40, 48, 51) acted upon by the restoring spring (25) and the effective length of the lever arm of that lever acted upon by the control spring (26) is greater when the restoring spring (25) is maximally relieved than when the restoring spring (25) is stressed most strongly.

5. Hydraulic valve according to claim 3 or 4, **characterized in that** the restoring spring (25) acts upon the lever (40, 48, 51) on one side, and the control spring (26) acts on the lever (40, 48, 51) on the other side of a plane defined by the direction of motion of the supporting elements (27, 28) and the axis (41) of the lever (40, 48, 51), both springs acting from the same direction, and the two supporting elements (27, 28) are displaceable oppositely from one another upon an adjustment.

6. Hydraulic valve according to claim 5, **characterized in that** the second supporting element (28) is displaceably guided in the housing (10) and the first supporting element (27) is displaceably guided in the second supporting element (28), and that the restoring spring (25) surrounds the control spring (26).

7. Hydraulic valve according to claim 5 or 6, **characterized in that** the second supporting element (28) is displaceably guided in the housing (10), and the first supporting element (27) is displaceably guided in the second supporting element (28), and that in every operational position of the two supporting elements (27, 28), the stop face (53), contacting the lever (40, 48, 51), of the first supporting element (27) is located closer to the axis (41) of the lever (40, 48, 51) than is the stop face (52) of the second supporting element (28) resting on the lever (40, 48, 51).

8. Hydraulic valve according to claims 4 and 7, **characterized in that** upon a motion of the lever (40, 48, 51) from the most strongly stressed to the least-stressed state of the restoring spring (25), the effective length of the lever arm acted upon by the restoring spring (25) becomes continuously greater and is at the maximum possible amount in the least-stressed state of the restoring spring (25).

9. Hydraulic valve according to claim 8, **characterized in that** upon a motion of the lever (40, 48, 51) from the most strongly stressed to the least-stressed state of the restoring spring (25), the effective length of the lever arm acted upon by the control spring (26) initially becomes continuously greater, assumes a maximum possible amount, and then becomes continuously smaller.

10. Hydraulic valve according to any of claims 3 to 9, **characterized in that** the lever (40, 48, 51) has a shaft (40), supported in the housing (10); that the stop location (48, 51) located on the lever (40, 48, 51) for at least one of the supporting elements (27, 28) in one operational position of the lever (40, 48, 51) is located inside the outer diameter of the shaft (40), and that the shaft (40) is provided with a recess (46, 50) into which at least one of the two supporting elements (27, 28) can plunge.

11. Hydraulic valve according to claim 10, **characterized in that** a contour (51) of the shaft (40) acted upon by a supporting element (28) is present only in the region of this supporting element (28), and that the other supporting element (27), in one operational position, plunges into a free space (50) of the shaft (40) that follows the contour (51) in the direction of the axis of the lever (40, 48, 51).

12. Hydraulic valve according to claim 11, **characterized in that** the contour (51) is present on both sides of the free space (50) and is acted upon on both sides of the free space (50) by the one supporting element (28).

13. Hydraulic valve according to any of claims 3 to 12, **characterized in that** the lever (40, 48, 51) has a shaft (40), supported in the housing (10), and that pins (48, 51) are secured in the shaft (40), which protrude into the recess (46, 50) of the shaft (40) and form the contours of the shaft (40) that are acted upon by the supporting elements (27, 28).

14. Hydraulic valve according to claim 13, **characterized in that** the shaft (40) has an axially extending, axially cut- open bore (47, 49) for a pin (48, 51), and that the pin (48, 51) is supported over its entire length against the force exerted on it by a spring (25, 26) by the bore wall that is still present.

15. Hydraulic valve according to claim 14, **characterized in that** the bore (47, 49) is cut open over only a portion of its length.

16. Hydraulic valve according to claim 14 or 15, **characterized in that** the circular arc of the bore wall that is still present in the cut-open portion of the bore (47, 49) is smaller than or equal to 180°.

17. Hydraulic valve according to any of claims 13 to16, **characterized in that** a first pin (48) for actuation by the first supporting element (27) and a second pin (51) for actuation by the second supporting element (28) are secured in the shaft (40), and that the pins (48, 51) have different diameters.

18. Hydraulic valve according to any of claims 13 to 17, **characterized in that** needle rollers (48, 51) form the pins.

19. Hydraulic valve according to any of claims 2 to 18, **characterized in that** the actuating device (43) is embodied as a pivotable lever and is secured on a shaft (40) supported in the housing (10), and that this shaft (40) is also the shaft of the lever (40, 48, 51) disposed between the springs (25, 26).

20. Hydraulic valve according to any of claims 3 to 19, **characterized in that** a tank port (18) to be connected to a supply tank of pressure medium is present; that a hollow chamber (16) in the housing (10), in which the restoring spring (25), the control spring (26), the supporting elements (27, 28), and the means (40, 48, 51) for force amplification are located, communicates, preferably internally, with the tank port, and that oil can be exchanged between the two partial chambers on either side of the supporting elements (27, 28) through a conduit (61).

21. Hydraulic valve according to claim 20, **characterized in that** the conduit (61) is located in one supporting element (27).

## Revendications

1. Une valve hydraulique, en particulier destinée à purger un frein à accumulateur à ressort, dotée d'un corps (10) et d'un organe (43) d'actionnement qui est guidé dans le corps et qui peut être ajusté dans des sens opposés, dotée d'un élément (14) de valve qui est logé dans le corps (10) de façon à être mobile, dotée d'un ressort (26) de commande qui est disposé entre des moyens d'appui (27, 28) mobiles et l'élément (14) de valve, et dotée d'un ressort (25) de rappel, lequel est disposé entre le corps (10) et les moyens d'appui (27, 28) et dont la tension peut être augmentée par un mouvement de l'organe (43) d'actionnement dans un des sens cependant que le ressort (26) de commande est relâché, ce ressort (25) de rappel permettant également de régler les moyens d'appui (27, 28) dans le sens d'une augmentation de la tension du ressort (26) de commande cependant que l'organe (43) d'actionnement est librement mobile dans le sens opposé, **caractérisée** par la présence de moyens (40, 48, 51) destinés à l'amplification mécanique de la force disposés dans le flux de force entre le ressort (25) de rappel et le ressort (26) de commande.

2. Une valve hydraulique conforme à la revendication n° 1, **caractérisée** par un levier (40, 48, 51) disposé dans le flux de force entre le ressort (25) de rappel et le ressort (26) de commande.

3. Une valve hydraulique conforme à la revendication n° 2, **caractérisée en ce que** les moyens d'appui présentent un premier élément (27) d'appui pour le ressort (26) de commande et un second élément (28) d'appui, distinct du précédent, pour le ressort (25) de rappel, et que les deux éléments (27, 28) d'appui peuvent être amenés à coulisser de préférence de façon linéaire, en parallèle l'un par rapport à l'autre.

4. Une valve hydraulique conforme à la revendication n° 3, **caractérisée en ce que,** pour le levier (40, 48, 51), le rapport entre la longueur efficace du bras de levier sollicité par le ressort (25) de rappel et la longueur efficace du bras de levier sollicité par le ressort (26) de commande est plus élevé pour un ressort (25) de rappel relâché au maximum que pour un ressort (25) de rappel tendu au maximum.

5. Une valve hydraulique conforme à la revendication n° 3 ou n° 4, **caractérisée en ce que** le ressort (25) de rappel et le ressort (26) de commande agissent sur le levier (40, 48, 51) à partir d'une même direction, l'un sur une face et l'autre sur l'autre face d'un plan défini par la direction du mouvement des éléments (27, 28) d'appui et par l'axe (41) du levier (40, 48, 51), et que les deux éléments (27, 28) d'appui peuvent coulisser dans des sens opposés l'un par rapport à l'autre lors d'un réglage.

6. Une valve hydraulique conforme à la revendication n° 5, **caractérisée en ce que** le second élément (28) d'appui est guidé de façon à pouvoir coulisser à l'intérieur du corps (10) et le premier élément (27) d'appui est guidé de façon à pouvoir coulisser à l'intérieur du second élément (28) d'appui, et que le ressort (25) de rappel ceint le ressort (26) de commande.

7. Une valve hydraulique conforme à la revendication n° 5 ou n° 6, **caractérisée en ce que** le second élément (28) d'appui est guidé de façon à pouvoir coulisser dans le corps (10) et le premier élément (27) d'appui est guidé de façon à pouvoir coulisser à l'intérieur du second élément (28) d'appui, et que, pour chacune des positions de travail des deux éléments (27, 28) d'appui, la surface d'impact (53) du premier élément (27) d'appui sur le levier (40, 48, 51) est plus proche de l'axe (41) du levier (40, 48, 51) que la surface d'impact (52) du second élément d'appui sur le levier (40, 48, 51).

8. Une valve hydraulique conforme aux revendications n° 4 et n° 7, **caractérisée en ce que,** lors d'un mouvement du levier (40, 48, 51) de la position où le ressort (25) de rappel est le plus tendu vers celle où il est le moins tendu, la longueur efficace du bras de levier sollicité par le ressort (25) de rappel croît de façon continue et atteint sa valeur la plus élevée possible lorsque le ressort (25) de rappel est dans son état le moins tendu.

9. Une valve hydraulique conforme à la revendication n° 8, **caractérisée en ce que** lors d'un mouvement du levier (40, 48, 51) de la position où le ressort (25) de rappel est le plus tendu vers celle où il est le moins tendu, la longueur efficace du bras de levier sollicité par le ressort (26) de commande d'abord croît de façon continue, ensuite atteint une valeur correspondant au maximum possible et enfin décroît de façon continue.

10. Une valve hydraulique conforme à une des revendications n° 3 à n° 9, **caractérisée en ce que** le levier (40, 48, 51) présente un arbre (40) qui est guidé à l'intérieur du corps (10), que dans une position de travail du levier (40, 48, 51) et pour au moins un des éléments (27, 28) d'appui le point (48, 51) d'impact au niveau du levier (40, 48, 51) se trouve à l'intérieur du diamètre extérieur de l'arbre (40), et que l'arbre (40) est pourvu d'une encoche (46, 50) qui permet la pénétration d'au moins un des deux éléments (27, 28) d'appui.

11. Une valve hydraulique conforme à la revendication n° 10, **caractérisée en ce que** un contour (51) de l'arbre (40) qui est soumis à l'impact d'un des éléments (28) d'appui n'existe que dans le périmètre de cet élément (28) d'appui, et que l'autre élément (27) d'appui pénètre dans une cavité (50) qui succède au contour (51) dans le sens de l'axe du levier (40, 48, 51) dans une position de travail.

12. Une valve hydraulique conforme à la revendication n° 11, **caractérisée en ce que** le contour (51) est présent de part et d'autre de la cavité (50) et est sollicité par l'un des éléments (28) d'appui de part et d'autre de la cavité (50).

13. Une valve hydraulique conforme à une des revendications n° 3 à n° 12, **caractérisée en ce que** le levier (40, 48, 51) présente un arbre (40) guidé à l'intérieur du corps (10), et que dans l'arbre (40) sont fixées des chevilles (48, 51) qui pénètrent dans l'encoche (46, 50) de l'arbre (40) et qui constituent les contours de l'arbre (40) contre lesquels les éléments (27, 28) d'appui produisent leur impact.

14. Une valve hydraulique conforme à la revendication n° 13, **caractérisée en ce que** l'arbre (40) présente un forage (47, 49) qui est destiné à une cheville (48, 51), qui le parcourt de façon axiale et qui est sectionné de façon axiale, et que la cheville (48, 51) est soutenue contre la force exercée par un ressort (25, 26) sur la totalité de sa longueur par la paroi du forage qui est encore présente.

15. Une valve hydraulique conforme à la revendication n° 14, **caractérisée en ce que** le forage (47, 49) n'est sectionné que sur une partie de sa longueur.

16. Une valve hydraulique conforme à une des revendications n° 14 ou n° 15, **caractérisée en ce que** l'arc de cercle de la paroi du forage qui est encore présent dans la partie sectionnée du forage (47, 49) est inférieur ou égal à 180°.

17. Une valve hydraulique conforme à une des revendications n° 13 à n° 16, **caractérisée en ce que** une première cheville (48) destinée à recevoir l'impact du premier élément (27) d'appui et une seconde cheville (51) destinée à recevoir l'impact du second élément (28) d'appui sont fixées dans l'arbre (40), et que les chevilles (48, 51) possèdent des diamètres différents.

18. Une valve hydraulique conforme à une des revendications n° 13 à n° 17, **caractérisée en ce que** des galets à aiguilles (48, 51) constituent les chevilles.

19. Une valve hydraulique conforme à une des revendications n° 2 à n° 18, **caractérisée en ce que** l'organe (43) d'actionnement est conçu sous forme d'un levier qui peut pivoter et qui est fixé sur un arbre (40) guidé dans le corps (10), et que cet arbre (40) correspond à l'arbre du levier (40, 48, 51) qui est disposé entre les ressorts (25, 26).

20. Une valve hydraulique conforme à une des revendications n° 3 à n° 19, **caractérisée en ce que** elle est dotée d'un raccordement (18) de réservoir qui peut être connecté à un réservoir de moyen de pression, qu'une cavité (16) du corps (10) qui abrite le ressort (25) de rappel, le ressort (26) de commande, les éléments (27, 28) d'appui et les moyens (40, 48, 51) destinés à l'amplification de la force communique avec le raccordement de réservoir, de préférence de façon interne, et qu'un échange d'huile peut avoir lieu par un canal (61) qui relie les deux sections de cavité présentes de part et d'autre des éléments (27, 28) d'appui.

21. Une valve hydraulique conforme à la revendication n° 20, **caractérisée en ce que** le canal (61) est disposé à l'intérieur d'un élément (27) d'appui.
